# EUROPEAN PATENT APPLICATION

(11) **EP 3 657 355 A1**
(43) Date of publication of application: **27.05.2020**
(21) Application number: 19211053.4
(22) Date of filing: 22.11.2019
(51) Int. Cl.: G06F 16/58, B41M 3/06, G06Q 30/02

(54) **INFORMATION PROCESSING SYSTEM, SERVER APPARATUS, AND INFORMATION PROCESSING PROGRAM**

(30) Priority: 26.11.2018 JP 2018220636
(71) Applicant: Ricoh Company, Ltd., Tokyo 143-8555 (JP)
(72) Inventor: KITABATAKE, Sae, Tokyo, 143-8555 (JP); TAKAYANAGI, Shingo, Tokyo, 143-8555 (JP)
(74) Representative: White, Duncan Rohan

(57) **Abstract**

An information processing system (100) including a server apparatus (200) and an output apparatus (300) is disclosed. For each output condition, a copy painting data are generated and stored based on imaging data, in which an original painting is imaged, and an output condition of the copy painting data, to represent the original painting. Management information indicating an output state is stored for each set of the copy painting data. The copy painting data, for which an output request is received, are output to the output apparatus (300), upon determining based on the management information that an output of the copy painting data is permitted in a case of receiving the output request of the copy painting data.

## Description

### BACKGROUND OF THE INVENTION

### 1. Field of the Invention

The present invention is related to an information processing system, a server apparatus, and an information processing program.

### 2. Description of the Related Art

Conventionally, a system for producing and selling copies of paintings (digital arts) from original paintings is known. In such a system, for example, copy data of the paintings are stored in a database of a server on a seller's side selling the copies of paintings, and a copy of a painting is printed out based on the copy data of the painting according to an order.

### [Patent Document]

Patent Document 1: Japanese Laid-Open Patent Application No. 2002-157483

However, the above-described technology does not consider settings for accuracy of copy or payment of royalties to an owner who is entitled to an original painting (ownership, copyright, or the like).

In view of such circumstances, the objective of the present disclosure is to manage an output of a reproduced painting with quality according to a royalty.

### SUMMARY OF THE INVENTION

In one aspect of this disclosure, an information processing system includes a server apparatus and an output apparatus, and includes a copy painting information storage part that stores, for each output condition, copy painting data representing a copy painting of an original painting generated based on imaging data, in which the original painting is imaged, and an output condition of the copy painting data; a management information storage part that stores management information indicating an output state for each set of the copy painting data; and an image output part that outputs the copy painting data, for which an output request is received, to the output apparatus, upon determining based on the management information that an output of the copy painting data is permitted in a case of receiving the output request of the copy painting data.

Therefore, it is possible to manage an output of a reproduced painting with quality according to a royalty.

### BRIEF DESCRIPTION OF THE DRAWINGS

In the following, embodiments of the present invention will be described with reference to the accompanying drawings.
FIG. 1 is a diagram illustrating an example of a system configuration of an information processing system according to a first embodiment;
FIG. 2 is a diagram illustrating an example of a hardware configuration of a server apparatus in the first embodiment;
FIG. 3 is a diagram illustrating an example of an original painting information storage part in the first embodiment;
FIG. 4 is a diagram illustrating an example of a copy painting information storage part in the first embodiment;
FIG. 5 is a diagram illustrating an example of a management information storage part according to the first embodiment;
FIG. 6 is a diagram illustrating a function of the server apparatus in the first embodiment;
FIG. 7 is a first flowchart for explaining an operation of the server apparatus in the first embodiment;
FIG. 8 is a second flowchart for explaining a process of the server apparatus in the first embodiment;
FIG. 9 is a diagram illustrating a display example of information representing a management state of a copy painting;
FIG. 10 is a diagram illustrating an example of a system configuration of an information processing system in a second embodiment;
FIG. 11 is a diagram illustrating an example of a copy painting information storage part in the second embodiment;
FIG. 12 is a diagram illustrating a function of the server apparatus in the second embodiment; and
FIG. 13 is a flowchart illustrating an operation of the server apparatus in the second embodiment.

### DESCRIPTION OF THE PREFERRED EMBODIMENTS

### (First Embodiment)

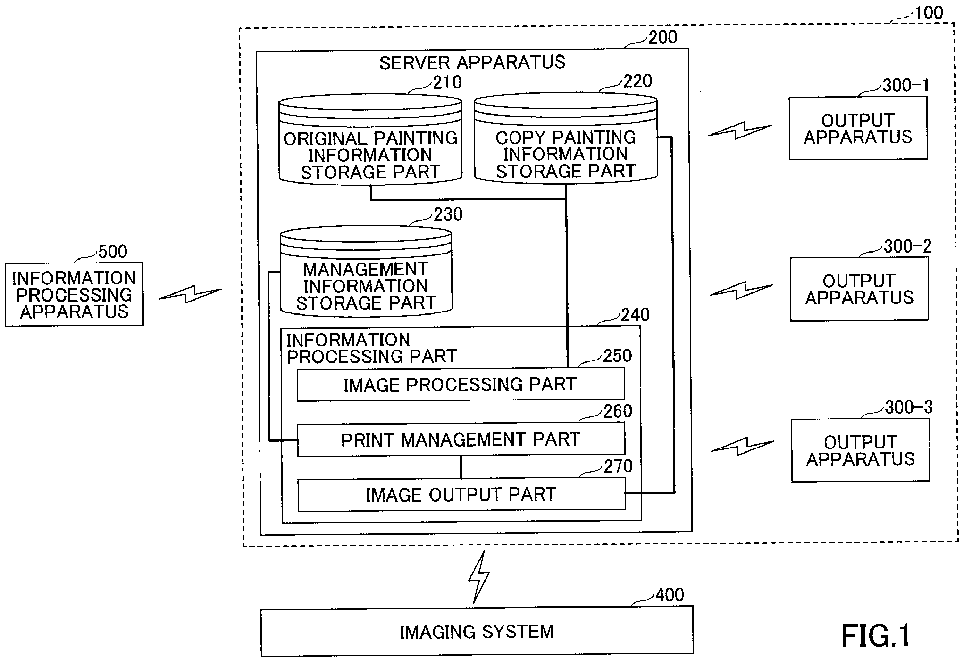

In the following, a first embodiment will be described with reference to the accompanying drawings. FIG. 1 is a diagram illustrating an example of a system configuration of an information processing system according to the first embodiment.

An information processing system 100 according to the present embodiment includes a server apparatus 200, and output apparatuses 300-1, 300-2, and 300-3. Also, the server apparatus 200 of the information processing system 100 also communicates with an imaging system 400 and an information processing apparatus 500.

The server apparatus 200 according to the first embodiment acquires imaging data of an original painting or artwork taken by the imaging system 400, and stores original painting data, which are generated by analyzing the imaging data. Also, the server apparatus 200 generates and stores copy data of paintings for outputting copies of paintings with various qualities from the imaging data. Details of the original painting data and the copy painting data will be described later. Hereinafter, a copy of a painting is referred to as "copy painting", and copy data of paintings are referred to as "copy painting data".

Further, when receiving an output request of a painting copy from the information processing apparatus 500, the server apparatus 200 according to the first embodiment outputs copy painting data corresponding to the requested painting copy from any of the output apparatuses 300-1, 300-2, and 300-3.

Specifically, the server apparatus 200 includes an original painting information storage part 210, a copy painting information storage part 220, a management information storage part 230, and an information processing part 240.

The information processing part 240 includes an image processing part 250, a print management part 260, and an image output part 270. The image processing part 250 generates original painting information, which includes the original painting data, and copy painting information, which includes the copy painting data, from the imaging data acquired from the imaging system 400. The image processing part 250 stores original painting information in the original painting information storage part 210 and the copy painting information in the copy painting information storage part 220.

The print management part 260 manages a sheet count of outputted copy paintings in accordance with information concerning a contract between an administrator of the information processing system 100 and an owner of the original painting. In the following description, the owner of the original painting corresponds to a person who has authority of the original painting (ownership, copyright, or the like).

The image output part 270 outputs the copy painting data corresponding to the copy painting to one of the output apparatuses 300-1, 300-2, and 300-3, in response to permitting an output of the copy painting by the print management part 260.

The output apparatuses 300-1, 300-2, and 300-3 according to the present embodiment are, for example, inkjet type three dimensional modeling apparatuses. Each of the three dimensional forming apparatuses ejects droplets onto a recording medium and cures the droplets to form a shaped layer based on data of an object to be reproduced, and stacks a plurality of shaped layers to obtain a three dimensional object.

In the following description, in a case in which the output apparatuses 300-1, 300-2, and 300-3 are not distinguished, each of the output apparatuses 300-1, 300-2, and 300-3 is simply referred to as an output apparatus 300. Moreover, the number of the output apparatuses 300 included in the information processing system 100 is not limited to the three devices shown in FIG. 1, and may be any number of devices.

The output apparatus 300 according to the first embodiment outputs the painting data transmitted from the server apparatus 200 in accordance with an output instruction from the server apparatus 200. In other words, the output apparatus 300 outputs a copy painting based on the painting data in response to the output instruction from the server apparatus 200.

The imaging system 400 in the first embodiment includes an imaging device and the like, and is, for example, a system for capturing an original painting at a location where the original painting is displayed. Imaging data may be transmitted from the imaging system 400 to the server apparatus 200, for example, by communication between the server apparatus 200 and the imaging system 400. For example, the imaging data may be stored in a recording medium in the imaging system 400 and read from the recording medium by the server apparatus 200.

Moreover, the imaging system 400 in the first embodiment includes an infrared camera or the like, and may store the information, which is obtained by analyzing inner layers of the original painting with infrared light, in association with the imaging data. Hence, it is possible to see what is behind a painting, and thus, it is possible to provide information being valuable for purchasers of a painting copy.

The information processing apparatus 500 is an apparatus for requesting an output of a copy painting to the information processing system 100. The information processing apparatus 500 in the first embodiment may be, for example, a terminal or the like, which is used by a seller who sells copy paintings using a service provided by the information processing system 100.

In the first embodiment, the output apparatus 300 and the information processing apparatus 500 are installed at a seller side, and the seller may utilize the service provided by the server apparatus 200.

As described above, in the first embodiment, when the copy painting is output based on the copy painting data generated from the image data of the original painting, the output number of the copy paintings is managed in accordance with information (contractual information) concerning a contract with the owner of the original painting. Accordingly to the first embodiment, it is possible to manage an output of the copy painting with quality corresponding to a royalty.

In an example depicted in FIG. 1, the original painting information storage part 210, the copy painting information storage part 220, and the management information storage part 230 are provided in the server apparatus 200 together with the information processing part 240; however, these storage parts 210, 220, and 230 are not limited to this arrangement. The original painting information storage part 210, the copy painting information storage part 220, and the management information storage part 230 may be arranged in a device other than the server apparatus 200. The information processing part 240 in the first embodiment may be realized by a plurality of apparatuses.

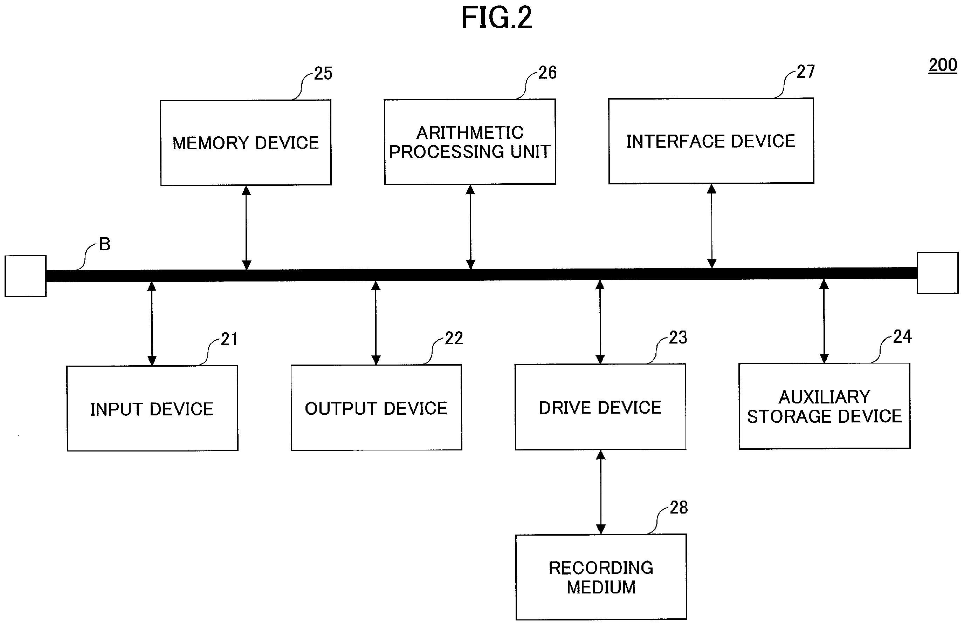

Hereinafter, the server apparatus 200 in the first embodiment will be described. FIG. 2 is a diagram illustrating an example of a hardware configuration of the server apparatus.

The server apparatus 200 in the first embodiment includes an input device 21, an output device 22, a drive device 23, an auxiliary storage device 24, a memory device 25, an arithmetic processing unit 26, and an interface device 27, each of which is mutually connected by a bus B.

The input device 21 is a device for inputting various kinds of information items, and is realized by, for example, a keyboard or a pointing device. The output device 22 is a device for outputting various kinds of information items, and is realized by, for example, a display. Interface device 27 includes a LAN card or the like, and is used to connect to the network.

The information processing program according to the first embodiment is at least a portion of various programs for controlling the server apparatus 200. The information processing program may be provided, for example, by distribution of the recording medium 28, downloading from the network, or the like. The recording medium 28, on which the information processing program is recorded, may be any of various types of storage media such as a CD-ROM, a flexible disk, a magneto-optical disk or the like, a storage medium on which information is optically, electrically, or magnetically recorded, a semiconductor memory on which information is electrically recorded such as a ROM, a flash memory, or the like.

The information processing program is installed in the auxiliary storage device 24 from the recording medium 28 via the drive device 23, when the recording medium 28 having the information processing program is set into the drive device 23. The information processing program downloaded from the network is installed in the auxiliary storage device 24 via the interface device 27.

The auxiliary storage device 24 stores the installed information processing program, and stores files, data, and the like necessary for each of databases described above. When the server apparatus 200 is activated, the memory device 25 reads out and stores the information processing program from the auxiliary storage device 24. The arithmetic processing unit 26 as a processor implements various processes as described later in accordance with the information processing program stored in the memory device 25.

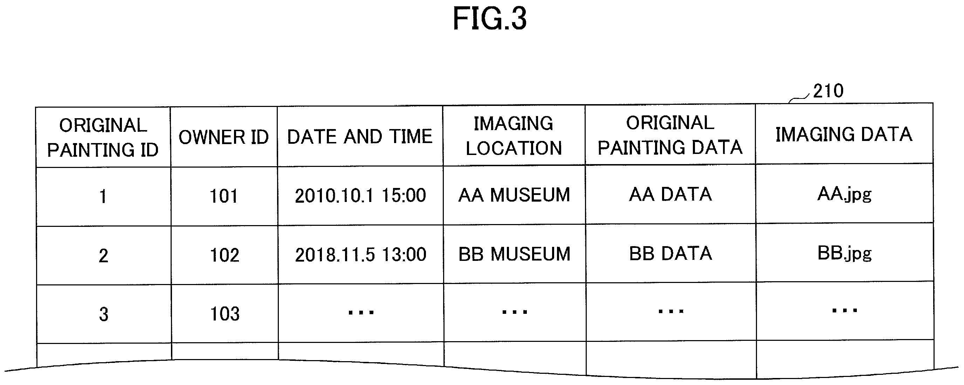

Next, each of the storage parts of the server apparatus 200 will be described with reference to FIG. 3 to 5. FIG. 3 is a diagram illustrating an example of the original painting information storage part in the first embodiment.

The original painting information stored in the original painting information storage part 210 in the first embodiment includes, as information items, "ORIGINAL PAINTING ID", "OWNER ID", "DATE AND TIME", "IMAGING LOCATION", "ORIGINAL PAINTING DATA", and "IMAGING DATA", and the item "ORIGINAL PAINTING ID" is associated with the other items.

A value of the item "ORIGINAL PAINTING ID" indicates an identification information for identifying the original painting data generated from the imaging data of the original painting. A value of the item "OWNER ID" indicates identification information for identifying the owner of the original painting. A value of the item "DATE AND TIME" indicates a date and time when the original painting was imaged. A value of the item "IMAGING LOCATION" indicates a location of the original painting.

In the following description, among pieces of the original painting information, information including the values of the items other than an item of "ORIGINAL PAINTING DATA" may be called as original information. That is, the original information includes the original painting ID of the original painting, the imaging data, the date and time, the imaging location, and the owner ID.

A value of the item "ORIGINAL PAINTING DATA" indicates the original painting data generated from the imaging data. A value of item "IMAGING DATA" indicates the imaging data acquired from the imaging system 400.

In an example depicted in FIG. 3, the original painting of the original painting ID "1" is possessed by an owner specified by the owner ID "101", and was captured by the imaging system 400 at 15:00 on October 1, 2010 at oo Museum, so that the original painting data was generated.

As described above, in the first embodiment, by storing the date and time, and the location of the original painting in association with the imaging data and the original painting data, so as to be capable of maintaining a condition of the original painting and its age in association with each other, for example.

The original painting information in the first embodiment is to be updated each time the original painting was captured by the imaging system 400.

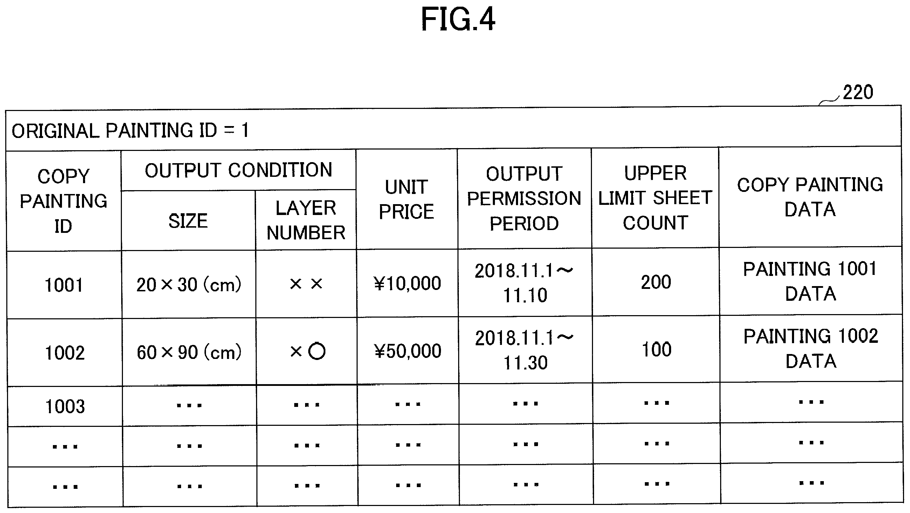

FIG. 4 is a diagram illustrating an example of the copy painting information storage part in the first embodiment. The copy painting information storage part 220 in the first embodiment is information provided for each of the original painting IDs, and includes, as information items, "ORIGINAL PAINTING ID", "COPY PAINTING ID", "OUTPUT CONDITION", "UNIT PRICE", "OUTPUT PERMISSION PERIOD", "UPPER LIMIT SHEET COUNT", and "COPY PAINTING DATA".

A value of the item "COPY PAINTING ID" indicates identification information for identifying the copy painting data generated from the imaging data of the original painting specified by the original painting ID.

A value of the item "OUTPUT CONDITION" indicates the output condition associated with the copy painting data. The output condition in the first embodiment is set, for example, upon obtaining permission of the owner of the original painting in a case of generating the copy painting data from the imaging data of the original painting.

In the first embodiment, the item "OUTPUT CONDITION" may include a plurality of condition items. Specifically, the plurality of condition items include, for example, items of "SIZE" and "LAYER NUMBER". In addition, various items relating to an image process such as presence or absence of gloss, pixel number, and the like may be set.

The value of the item "UNIT PRICE" indicates a unit price for one copy of a painting produced by outputting the copy painting data specified by the copy painting ID from the output apparatus 300. In other words, the value of the item "UNIT PRICE" is information that indicates a royalty to the original painting, which occurs each time the copy painting is output.

A value of the item "OUTPUT PERMISSION PERIOD" specifies a period permitted to output (generated) a copy painting based on the copy painting data. A value of the item "UPPER LIMIT SHEET COUNT" indicates an upper limit of sheets of the copy painting permitted to output based on the copy painting data.

The items "OUTPUT CONDITION", "UNIT PRICE", "OUTPUT PERMISSION PERIOD", and "UPPER LIMIT SHEET COUNT" of the copy painting information storage part 220 are determined by a contract or the like between the owner of the original painting and the administrator of the information processing system 100. In other words, information including the values of the items "OUTPUT CONDITION", "UNIT PRICE", "OUTPUT PERMISSION PERIOD", and "UPPER LIMIT SHEET COUNT" is an example of contract information.

The value of the item "COPY PAINTING DATA" indicates copy painting data generated from the image data of the original painting. That is, the copy painting data in the first embodiment are regarded as data generated for each output condition with respect to a plurality of patterns from one original painting.

Hereinafter, the original painting data and the copy painting data in the first embodiment will be described.

For example, the original painting data and the copy painting data in the first embodiment correspond to pieces of information, in which height information is additionally provided to each of image data pieces acquired by decomposing imaging data capturing the original painting by an analysis process such as the color decomposition process or the like.

That is, in a case of regarding images acquired by decomposing the imaging data for each of colors as an image of one modeling layer formed by the output apparatus 300, each of the original painting data and the copy painting data is represented by a set of image data pieces corresponding to colors. In the following description, the number of image data pieces for one image forming the modeling layer is referred to as a layer number.

In the first embodiment, the finer the colors are to decompose the imaging data of the original painting, the higher the accuracy of reproducing irregularities of a surface of the original painting.

In the following description, the number of image data pieces of an image forming a modeling layer in the original painting data may be referred to as a layer number of modeling layers represented by the original painting data, and the number of image data pieces for an image forming the modeling layers included in the copy painting data may be referred to as the number of modeling layers of the copy painting data. In the first embodiment, the number of modeling layers of the original painting data indicates a maximum number of the modeling layers for the copy painting data.

Accordingly, a structure, which is output from the output apparatus 300 based on the original painting data, has the highest reproducibility compared to a structure output from the output apparatus 300 based on the copy painting data.

Thus, for example, in a case in which the owner of an original painting has permitted selling copies of the using the original painting data, it may be possible to provide a highly accurate copy of the original painting. Alternatively, for example, in a case in which the owner of the original painting requests a limit on the reproducibility of the copy painting, it is possible to provide a copy painting generated based on the copy painting data, in which the multiplied number of the output condition is adjusted. It should be noted that the original painting data in the first embodiment are a part of the copy painting data.

In the first embodiment, the accuracy of the copy painting is mainly adjusted by the layer number; however, accuracy of reproducing the copy painting may be adjusted by one or more items other than the output condition.

In the first embodiment, the owner of the original painting may set the unit price of the copy painting, the output permission period, and the upper limit sheet count for each of output conditions of the copy painting data.

In the example of FIG. 4, the copy painting information generated from the imaging data of the original painting ID "1" is stored.

Specifically, in the example of FIG. 4, it can be seen that sets of the copy painting data of the copy painting IDs "1001" and "1002" are generated from the image data of the original painting ID "1".

The copy painting data of the copy painting ID "1001" indicates 20 x 30 centimeters in size and the layer number "xx" based on the imaging data of the original painting. Moreover, for the copy painting based on the copy painting data of the copy painting ID "1001 ", a price is indicated to be 10,000 yen per copy, the output permission period is from November 1, 2018 to November 10, 2018, and the upper limit sheet count of the copy paintings to be output during that period is 200 copies.

The copy painting data of the painting ID "1002" indicates 60 x 90 centimeters in size and "xo" layers more than the "xx" layers as the layer number based on the imaging data of the original painting. Moreover, for the copy painting based on the copy painting data of the painting ID "1002", a price is indicated to be 50,000 yen per piece, the output permission period is from November 1, 2018 to November 30, 2018, and the upper limit sheet count of the copy paintings to be output during that period is 100 pieces.

In the first embodiment, the copy painting information is updated upon instructing generation of the copy painting data with a new output condition for the imaging data of the original painting, or upon changing at least one of the unit price, the output permission period, the upper limit sheet count, and the like.

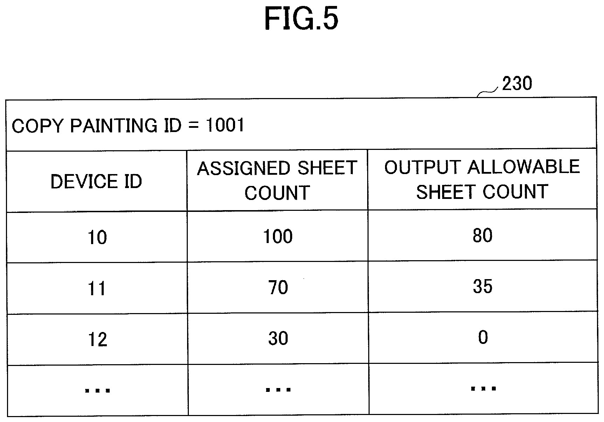

FIG. 5 is a diagram illustrating an example of the management information storage part according to the first embodiment. The management information storage part 230 in the first embodiment stores information provided for each of the copy painting IDs, and includes items of "DEVICE ID", "ASSIGNED SHEET COUNT", and "OUTPUT ALLOWABLE SHEET COUNT".

A value of the item "DEVICE ID" indicates identification information for specifying the output apparatus 300 included in the information processing system 100. A value of the item "ASSIGNED SHEET COUNT" indicates an upper limit value of a sheet count of copy paintings, which is assigned to the output apparatus 300 specified by the device ID.

A value of the item "OUTPUT ALLOWABLE SHEET COUNT" indicates an output count of a copy painting permitted at the output apparatus 300 specified by the device ID. Accordingly, a value of the item "OUTPUT ALLOWABLE SHEET COUNT" is reduced in accordance with the number of copies each time the output apparatus 300 outputs copies of paintings.

According to the first embodiment, for each output apparatus 300 included in the information processing system 100, the number of output of the copy painting is assigned so as to be within the upper limit value of the number of output of the copy painting specified by the copy painting ID.

The administrator of the information processing system 100 may determine this assignment beforehand. Also, in a case in which the output apparatus 300 is provided with the information processing apparatus 500 on the seller side to sell the copy paintings, for example, this assignment may be determined in accordance with an agreement between the administrator of the server apparatus 200 and the seller.

In the example of FIG. 5, for the output apparatus 300 specified by the device ID "10", 100 copies are assigned as the output count of the copy painting based on the copy painting data of the copy painting ID "1001 ", and the copy painting may be output for remaining 80 copies. That is, it is indicated that 20 copies of paintings were output from the output apparatus 300 specified by the device ID "10".

That is, the management information stored in the management information storage part 230 in the first embodiment corresponds to an example of information representing a printing history of each painting for each of the output apparatuses 300. In other words, the management information may be regarded as information indicating an output status of the copy painting data for each output condition.

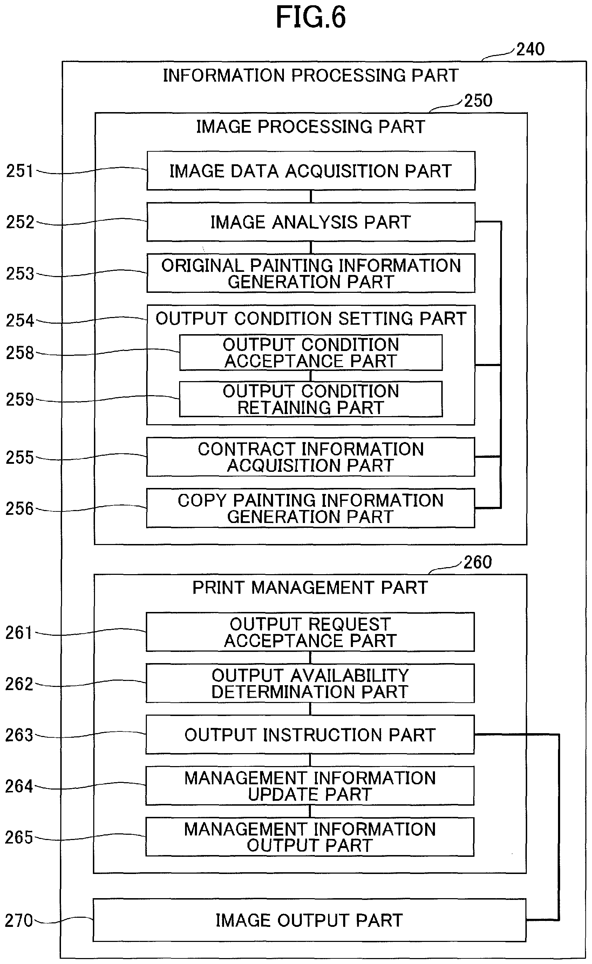

Next, a function of the server apparatus 200 in the first embodiment will be described with reference to FIG. 6. FIG. 6 is a diagram illustrating the function of the server apparatus in the first embodiment.

The server apparatus 200 in the first embodiment includes an information processing part 240, and the information processing part 240 includes an image processing part 250, a print management part 260, and an image output part 270.

The image processing part 250 in the first embodiment includes an image data acquisition part 251, an image analysis part 252, an original painting information generation part 253, an output condition setting part 254, a contract information acquisition part 255, and a copy painting information generation part 256.

The image data acquisition part 251 acquires the imaging data of the original painting taken by the imaging system 400. The image data acquisition part 251 may receive the imaging data by communication from the imaging system 400 or may read out the imaging data, which are stored in a recording medium in the imaging system 400, from the recording medium.

The image analysis part 252 analyzes the imaging data and generates image data pieces of images forming a modeling layer for each of modeling layers.

The original painting information generation part 253 generates original painting information, in which the original painting data regarded as a set of image data pieces for each modeling layer generated by the image analysis part 252 are associated with a date and time when imaging data are created, an imaging location, an owner ID of the owner of the original painting, and the imaging data, and stores the original painting information in the original painting information storage part 210.

The output condition setting part 254 sets an output condition for generating the copy painting data. The output condition setting part 254 includes an output condition acceptance part 258 and an output condition retaining part 259. The output condition acceptance part 258 receives an input of the output condition. The output conditions may be entered, for example, by the administrator of the information processing system 100 or the like.

The output condition retaining part 259 maintains the entered output condition. At this stage, the output condition retaining part 259 may assign a copy painting ID to the entered output condition, and may associate, in advance, the output condition with the copy painting data generated in accordance with the output condition.

The contract information acquisition part 255 acquires information as contract information concerning a contract agreement between an owner of the original painting and the administrator of the information processing system 100. Specifically, the contract information is regarded as information indicating the output condition, the unit price, the output permission period, the upper limit sheet count for each of copy painting IDs. For example, the contract information acquisition part 255 in the first embodiment may acquire the contract information entered by the administrator of the information processing system 100, or the contract information acquisition part 255 may receive the contract information transmitted from an outside.

The copy painting information generation part 256 generates the copy painting data from the imaging data of the original painting based on the output conditions set by the output condition setting part 254. Also, the copy painting information generation part 256 generates copy painting information, in which the contract information and the copy painting data are associated with each other for each of copy painting IDs, and stores the copy painting information in the copy painting information storage part 220.

The print management part 260 includes an output request acceptance part 261, an output availability determination part 262, an output instruction part 263, a management information update part 264, and a management information output part 265.

The output request acceptance part 261 in the first embodiment receives an output request of a copy printing from the information processing apparatus 500. Specifically, the output request acceptance part 261 may receive the copy painting ID representing a selected copy painting, the output sheet count, and the device ID of the output apparatus 300 performing an output, as the output request of a copy painting.

Upon receiving the output request of the copy painting, the output availability determination part 262 determines whether to be possible to output a copy painting for a indicated sheet count from the output apparatus 300 specified by the device ID, by referring to the management information storage part 230.

The output instruction part 263 sends an output instruction of a copy printing to the image output part 270 in accordance with a determination result of the output availability determination part 262. Specifically, the output instruction part 263 transmits copy painting data of a selected copy painting ID to the output apparatus 300 specified by the device ID.

The management information update part 264 updates the management information storage part 230 in response to an output of the copy painting. The management information output part 265 outputs management information upon receiving an output instruction of the management information stored in the management information update part 264.

When the image output part 270 receives the output instruction of the copy painting and the copy painting data from the output instruction part 263, the image output part 270 transmits the copy painting data to the specified output apparatus 300 to output the copy painting.

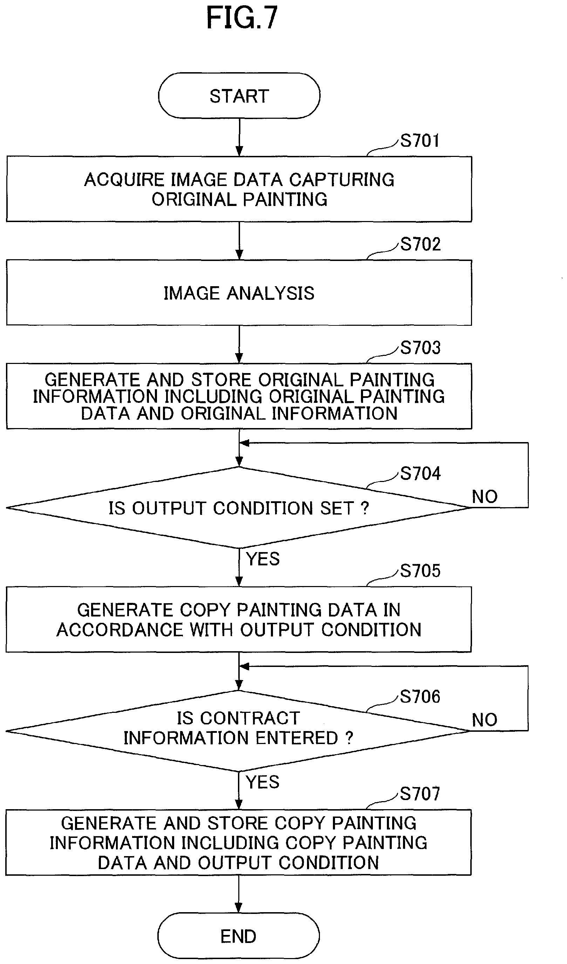

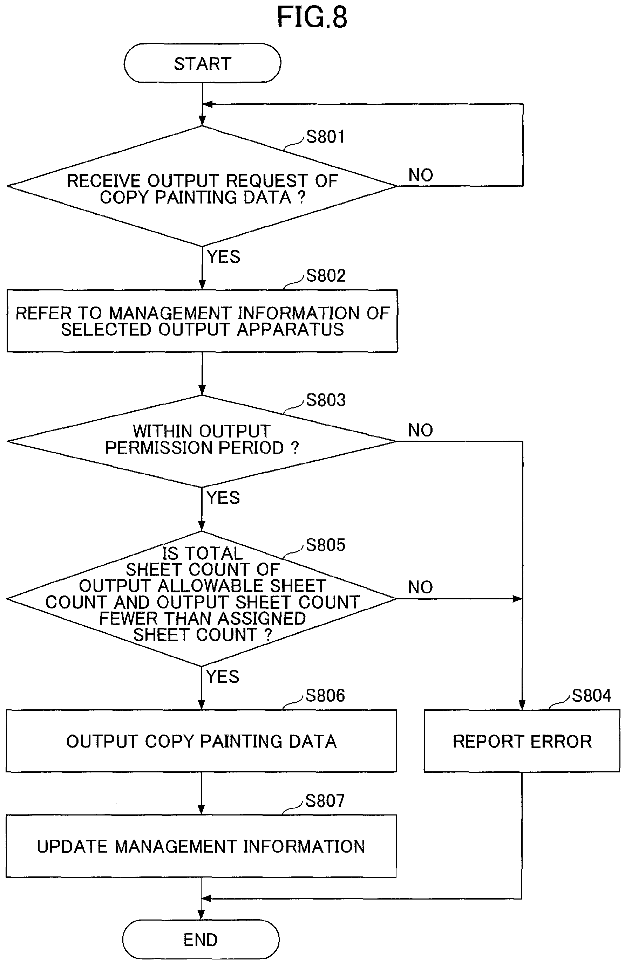

Next, an operation of the server apparatus 200 in the first embodiment will be described with reference to FIG. 7 and FIG. 8. FIG. 7 is a first flowchart for explaining the operation of the server apparatus in the first embodiment. A process depicted in FIG. 7 represents a method for storing the original painting data and the copy painting data by the image processing part 250 of the server apparatus 200.

The server apparatus 200 in the first embodiment acquires the imaging data of the original painting by the image data acquisition part 251 of the image processing part 250 (step S701). Next, the image processing part 250 performs an image analysis with respect to the image data by the image analysis part 252 (step S702).

Subsequently, the image processing part 250 generates the original image data from an image analysis result by the original painting information generation part 253, generates original painting information associated with original information, and stores the original painting information in the original painting information storage part 210 (step S703).

Subsequently, the image processing part 250 determines whether the output condition of the copy painting is set by the output condition setting part 254 (step S704). In step S704, when the output condition is not set, the image processing part 250 waits until the output condition is set.

In step S704, when the output condition is set, the image processing part 250 generates the copy painting data by the copy painting information generation part 256 using a result of the image analysis (step S705).

Subsequently, the image processing part 250 determines whether the contract information associated with the copy painting ID has been acquired by the contract information acquisition part 255 (step S706). In step S706, in a case in which the contract information has not been acquired, the image processing part 250 waits until the contract information is acquired.

In step S706, upon acquiring the contract information, the copy painting information generation part 256 generates copy painting information associating the copy painting data with the contract information, stores the copy painting information in the copy painting information storage part 220 (step S707), and terminates this process.

In the example depicted in FIG. 7, an accumulation of the original painting information and an accumulation of the copy painting information are performed as a series of processes; however, a process flow is not limited to this example.

In the first embodiment, for example, when it is determined in step S704 that the output condition of the copy painting data is not set, this process may be terminated. In this case, upon setting the output condition of the copy painting data, processes in step S705 and later may be performed.

In the first embodiment, as described above, the original painting information and the copy painting information are generated from the image data of the original painting, and are stored in the auxiliary storage device 24 or the memory device 25.

Next, an output of a copy painting in the information processing system 100 in the first embodiment will be described with reference to FIG. 8. FIG. 8 is a second flowchart for explaining a process of the server apparatus in the first embodiment. FIG. 8 depicts a process conducted by the print management part 260 in a case in which the server apparatus 200 receives an output request of the copy painting.

The print management part 260 in the first embodiment determines whether an output request of the copy painting data is received by the output request acceptance part 261 (step S801). In step S801, when the output request is not received, the print management part 260 waits until the output request is received.

When the output request is received (step S801), the print management part 260 refers to the management information storage part 230 by the output availability determination part 262, and refers to management information of the device ID of the output apparatus 300, which is indicated by the received output request (step S802). The output request acceptance part 261 receives the copy painting ID, the device ID of the output apparatus 300, and an output sheet number as the output request.

Subsequently, the output availability determination part 262 determines whether the date and time when the output request is received are within the output permission period (in step S803). In step S803, when it is determined that the date and time are not within the output permission period, the print management part 260 reports an error to the information processing apparatus 500 being a transmission originator of the output request (step S804), and terminates this process.

At this time, the print management part 260 may report a message indicating that a selected copy painting is out of the output permission period to the information processing apparatus 500.

When it is determined in step S805 that the date and time are within the output permission period, the output availability determination part 262 determines whether a total sheet count of the output allowable sheet count and the output sheet count in the management information is fewer than the assigned sheet count (step S805).

When it is determined in step S805 that the total sheet count of the output allowable sheet count and the output sheet count is not fewer than the assigned sheet count, that is, that the total sheet count of the output allowable sheet count and the output sheet count is more than or equal to the assigned sheet count, the print management part 260 advances to step S804. At this time, the print management part 260 may report the information processing apparatus 500 in step S804 of a message indicating that the output sheet count of the selected copy painting exceeds the assigned sheet count at the selected output apparatus 300.

When it is determined in step S805 that the total sheet count of the output allowable sheet count and the output sheet count is fewer than the assigned sheet count, the print management part 260 sends an output instruction of the copy painting data corresponding to the copy painting ID by the output instruction part 263 to the image output part 270, and outputs the copy painting data to the output apparatus 300 by the image output part 270 (step S806).

Subsequently, the print management part 260 updates the management information of the management information storage part 230 by the management information update part 264 (step S807), and terminates this process. Specifically, the management information update part 264 deducts the number of sheets used for outputting the copy painting from the output allowable sheet count indicated in the management information corresponding to the device ID included in the output request.

As described above, according to the first embodiment, because it is determined to permit outputting the copy painting based on the contract information, it is possible to prevent the copy painting from being distributed in the market against an intent of the owner of the original painting.

In the first embodiment, it is possible to display information indicating a management state of the copy painting for each of original paintings.

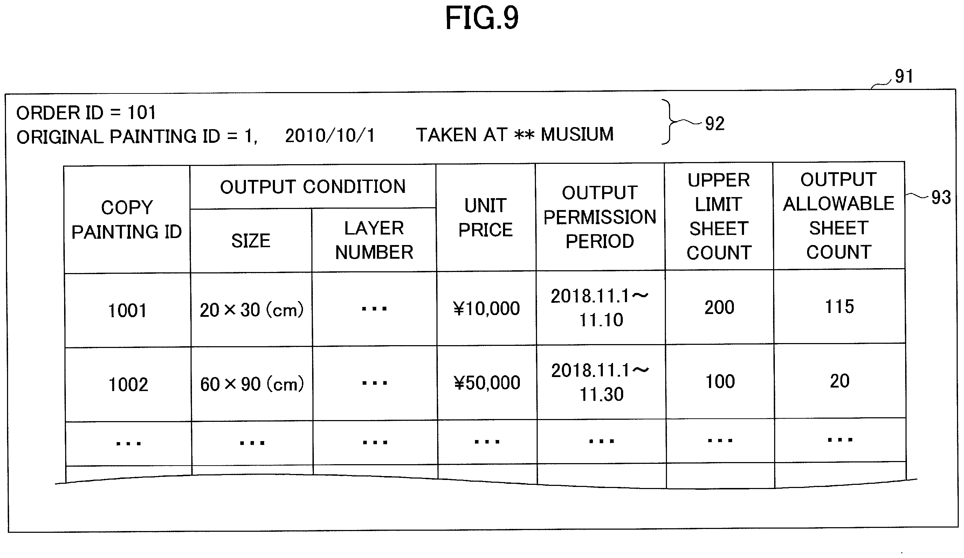

FIG. 9 is a diagram illustrating a display example of information representing the management state of a copy painting. For example, a screen 91 illustrated in FIG. 9 may be displayed on a display or the like of the server apparatus 200, or may be displayed on a terminal or the like of the owner upon receiving a display request from the owner of an original painting.

The screen 91 depicted in FIG. 9 displays original information 92 of the original painting and information 93 indicating the management state of the copy painting.

Information 93 indicating the management state of the copy painting includes contract information, which indicates an output condition, a unit price, an output permission period, and a current output allowable sheet count of a copy painting for each of copy painting IDs. The information 93 representing the management state of the copy painting in the first embodiment may include a count of the copy painting that has been output in addition to the current output allowable sheet count of the copy painting.

The information 93 indicating the management state of the copy painting may include the output allowable sheet count of the copy painting, and the sheet count of the copy painting that have been output for each device ID.

That is, in the first embodiment, the management information is output for each piece of the copy painting data generated for each of the plurality of output conditions from one original painting.

In the first embodiment, as described above, because the original information 92 and the information 93 representing the management state of the copy printing are displayed, for example, it is possible for the administrator of the information processing system 100 and the owner of the original printing to understand the management state of the copy printing.

In the first embodiment, the original information 92 includes information indicating the date and time and the imaging location of the imaging data.

Therefore, according to the first embodiment, it is possible to appropriately evaluate the value of the copy painting in a case in which the original painting is deteriorated due to age and is produced with value as a texture of the original painting.

Moreover, according to the first embodiment, for example, by periodically acquiring imaging data of the original painting in an affiliated art gallery or museum, and accumulating the imaging data, it is possible for a purchaser of the copy painting to purchase the copy painting by specifying a desired date.

Furthermore, according to the first embodiment, the unit price or the like corresponding to the output condition of the copy painting is set as the contract information, and an output availability of the copy painting is determined in accordance with the contract information. Hence, it is possible to control the output of the copy painting with a quality corresponding to the royalty.

### (Second Embodiment)

A second embodiment will be described with reference to the drawings. In the second embodiment, when copy painting data are generated, it is different from the first embodiment in that three dimensional information representing irregularities of a copy painting is applied, and in that electronic watermark information representing original information is embedded in copy painting data. Accordingly, in the following in the second embodiment, portions different from the first embodiment will be described. For functional structure similar to the first embodiment, the same numerals as those used in the description of the first embodiment are applied, and the explanations thereof will be omitted.

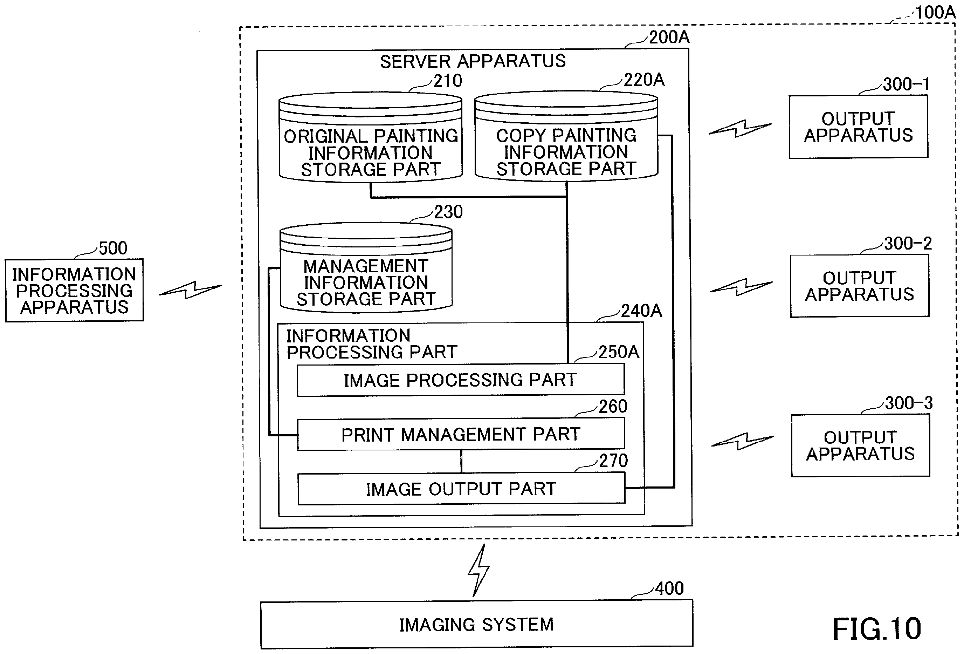

FIG. 10 is a diagram illustrating an example of a system configuration of an information processing system in the second embodiment. The information processing system 100A according to the second embodiment includes a server apparatus 200A.

The server apparatus 200A includes an original painting information storage part 210, a copy painting information storage part 220A, a management information storage part 230, and an information processing part 240A.

The information processing part 240A includes an image processing part 250A, a print management part 260, and an image output part 270A.

In a case of generating copy painting data by the image processing part 250A, the server apparatus 200A in the second embodiment acquires three dimensional information as an output condition, and expresses the irregularities of the copy painting in accordance with the three dimensional information. Also, the image processing part 250A in the second embodiment embeds watermark information when the image processing part 250A generates the copy painting data.

When the image output part 270A outputs the copy painting data to the output apparatus 300, the image output part 270A embeds, as watermark information, information indicating the number of times the copy painting data had been output to the output apparatus 300 being an output destination of the copy painting data. That is, the image output part 270A embeds information (a lot number) indicating a sheet count of a copy painting specified by the copy painting ID in the copy painting data, which had been output at the output apparatus 300.

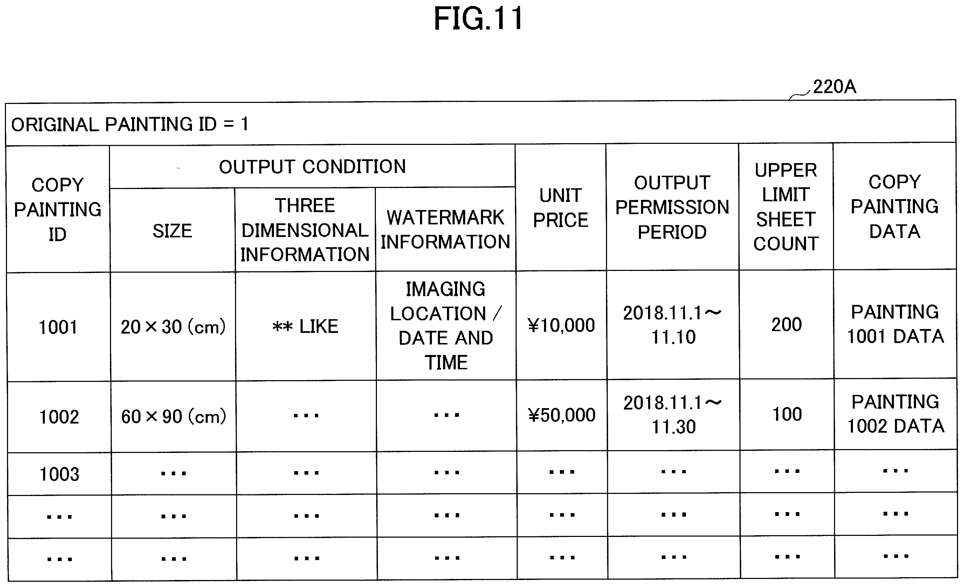

Hereinafter, the copy painting information storage part 220A in the second embodiment will be described with reference to FIG. 11. FIG. 11 is a diagram illustrating an example of a copy painting information storage part in the second embodiment.

The copy painting information stored in the copy painting information storage part 220A in the second embodiment is provided for each of original painting IDs. The copy painting information includes "COPY PAINTING ID", "OUTPUT CONDITION", "WATERMARK INFORMATION", "UNIT PRICE", "OUTPUT PERMISSION PERIOD", "UPPER LIMIT SHEET COUNT", and "COPY PAINTING DATA", as items of information.

A plurality of conditions indicated in the item "OUTPUT CONDITION" in the second embodiment are, for example, a size of a copy painting and three dimensional information representing irregularities of the copy painting. The three dimensional information is information for assigning a height of each pixel with respect to a two dimensional image. In the second embodiment, by generating copy painting data, in which height information corresponding to the three dimensional information indicating a height of each pixel is applied to an captured image represented by imaging data, it is possible to output a copy painting representing the irregularities.

The three dimensional information may be set to an output condition, for example, by manual operation. The three dimensional conditions may be retained, for example, as a result from analyzing the irregularities of a particular original painting. In this case, the copy painting may be in a style similar to that of this particular original painting.

A value of the item "WATERMARK INFORMATION" corresponds to, for example, original information included in original painting information.

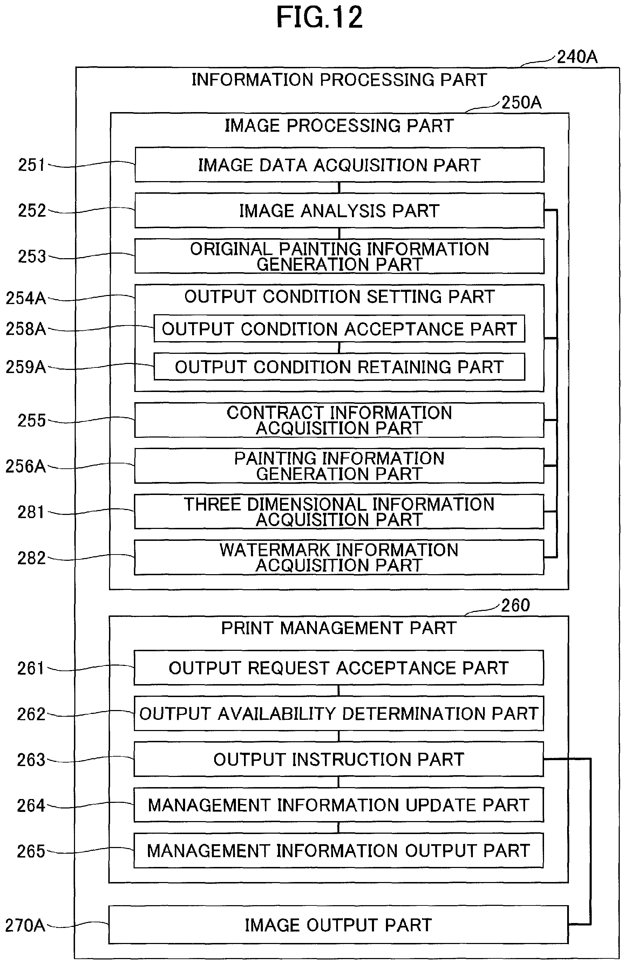

Next, a function of the server apparatus 200A in the second embodiment will be described with reference to FIG. 12. FIG. 12 is a diagram illustrating the function of the server apparatus in the second embodiment.

The information processing part 240A of the server apparatus 200A in the second embodiment includes an image processing part 250A, a print management part 260, and an image output part 270A.

The image processing part 250A includes an image data acquisition part 251, an image analysis part 252, an original painting information generation part 253, an output condition setting part 254A, a contract information acquisition part 255, a copy painting information generation part 256A, a three dimensional information acquisition part 281, and a watermark information acquisition part 282.

The output condition setting part 254A includes an output condition acceptance part 258A and an output condition retaining part 259A.

The copy painting information generation part 256A generates copy painting data, in which watermark information acquired by the watermark information acquisition part 282 is embedded. Also, the copy painting information generation part 256A generates the copy painting data based on the imaging data and the three dimensional information.

The output condition acceptance part 258A receives an input of the three dimensional information as one of output conditions. The three dimensional information may be input, for example, by an operation applying height information to the imaging data. The three dimensional information may be entered as pre-created information. In this case, for example, the three dimensional information may be information generated by an artificial intelligence or the like based on other paintings or the like of an original painter.

The output condition retaining part 259A holds the output condition received by the output condition acceptance part 258A to the copy painting information storage part 220A.

The three dimensional information acquisition part 281 according to the present embodiment acquires the stereo information from the output condition stored in the copy painting information storage part 220A.

The watermark information acquisition part 282 in the second embodiment acquires the original information stored in the original painting information storage part 210 as watermark information (electronic watermark) to be embedded in the copy painting data.

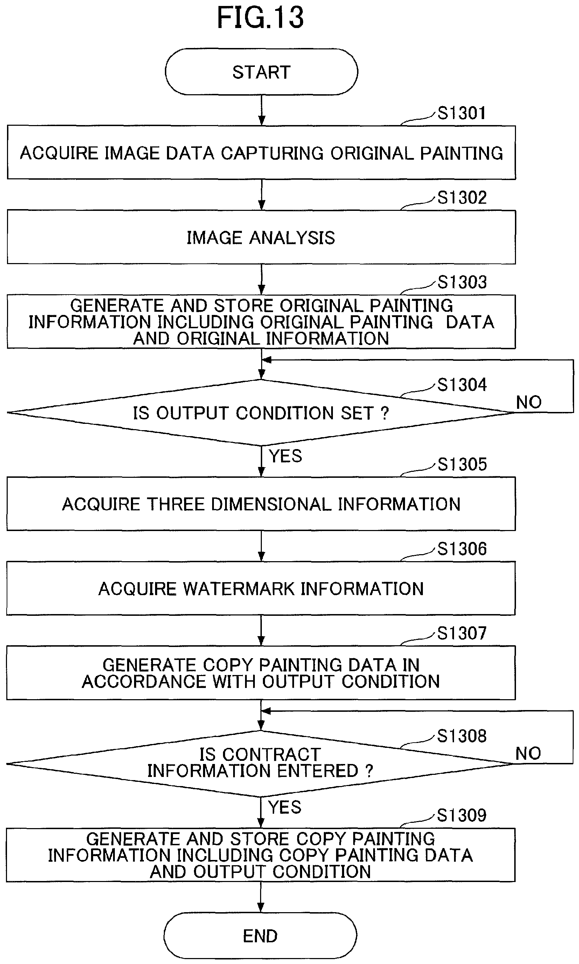

Next, an operation of the server apparatus 200A in the present embodiment will be described with reference to FIG. 13. FIG. 13 is a flowchart illustrating the operation of the server apparatus in the second embodiment. FIG. 13 depicts a process for accumulating the original painting data and the copy painting data by the image processing part 250A.

Because processes from step S1301 to step S1304 in FIG. 13 are the same as those from step S701 through step S704 in FIG. 7, the explanations thereof will be omitted.

When the output condition is set in step S1304, the image processing part 250A acquires the three dimensional information included in the output condition by the three dimensional information acquisition part 281 (step S1305).

Subsequently, the image processing part 250A acquires the watermark information by the watermark information acquisition part 282 by referring to the original painting information storage part 210 (step S1306).

Subsequently, the copy painting information generation part 256A generates copy painting data, in which the irregularities are represented based on the acquired three dimensional information and the watermark information is embedded (step S1307).

Because processes in step S1308 and step S1309 in FIG. 13 are the same as those in step S706 and step S707 in FIG. 7, the explanations thereof will be omitted.

As described above, in the second embodiment, it is possible to embed original information relating to an original painting, a lot number of a copy painting, and the like, thereby controlling distribution of the copy painting.

Although the invention has been described in accordance with the embodiments, the invention is not limited to the requirements shown in the embodiments. In these respects, the subject matter of the present invention may be varied without prejudice and may be suitably defined according to its application.

According to the above described embodiments of the present invention, in a notification control device that notifies a predetermined destination of a status of a user based on temperature image data captured within a predetermined capturing range, it is possible to reduce error notifications while suppressing a delay of a notification indicating the status of the user.

The present invention can be implemented in any convenient form, for example using dedicated hardware, or a mixture of dedicated hardware and software. The present invention may be implemented as computer software implemented by one or more networked processing apparatuses. The network can include any conventional terrestrial or wireless communications network, such as the Internet. The processing apparatuses can include any suitably programmed apparatuses such as a general purpose computer, a personal digital assistant, a mobile telephone (such as a WAP or 3G-compliant phone) and so on. Since the present invention can be implemented as software, each and every aspect of the present invention thus encompasses computer software implementable on a programmable device.

The computer software can be provided to the programmable device using any storage medium for storing processor readable code such as a floppy disk, a hard disk drive, a CD ROM, a magnetic tape device or a solid state memory device.

The hardware platform includes any desired kind of hardware resources including, for example, a processor such as a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing system (100) including a server apparatus (200) and an output apparatus (300), comprising:
a copy painting information storage part (220) that stores, for each output condition, copy painting data representing a copy painting of an original painting generated based on imaging data, in which the original painting is imaged, and an output condition of the copy painting data;
a management information storage part (230) that stores management information indicating an output state for each set of the copy painting data; and
an image output part (270) that outputs the copy painting data, for which an output request is received, to the output apparatus (300), upon determining based on the management information that an output of the copy painting data is permitted in a case of receiving the output request of the copy painting data.

2. The information processing system as claimed in claim 1, wherein the management information includes information indicating a royalty for the original painting, the royalty occurred every time the original painting indicating the original painting data is output.

3. The information processing system as claimed in claim 1, wherein the output condition indicates a condition corresponding to a degree of reproduction of the original painting by the copy painting.

4. The information processing system as claimed in claim 1, wherein the management information includes information indicating an upper limit sheet count of an output sheet count of the copy painting to be output from the output apparatus (300), information indicating an output permission period of the copy painting, and information indicating a sheet count permitted for outputting the copy painting at the output apparatus (300), and
wherein the information processing system further includes
an output availability determination part that determines based on a date and time when the output request is received, the sheet count permitted for outputting the copy painting at the output apparatus (300), and the upper limit sheet count whether to output the copy painting data to the output apparatus (300); and
a management information update part that reduces a sheet count on which the copy painting had been output, from the sheet count permitted to output the copy painting at the output apparatus (300) in the management information, in a case in which the copy painting data has been output to the output apparatus (300).

5. The information processing system as claimed in claim 1, further comprising a copy painting information generation part that generates the copy painting data from the imaging data of the original painting,
wherein the copy painting information generation part embeds watermark information including information indicating a date and time when the original painting was imaged, into the copy painting data.

6. The information processing system as claimed in claim 5, wherein the watermark information includes information specifying an owner of the original painting, and information indicating a location where the original painting was imaged.

7. The information processing system as claimed in claim 5, further comprising a three dimensional information acquisition part that acquires three dimensional information representing irregularities of the copy painting,
wherein the copy painting information generation part generates the copy painting data by using the three dimensional information.

8. The information processing system as claimed in claim 1, wherein the management information is output for each set of the copy painting data generated for each output condition representing one of multiple patterns, from the original painting.

9. The information processing system as claimed in claim 1, wherein the output apparatus (300) is a three dimensional modeling apparatus.

10. A server apparatus (200), comprising:
a copy painting information storage part (220) that stores, for each output condition, copy painting data representing a copy painting of an original painting generated based on imaging data, in which the original painting is imaged, and an output condition of the copy painting data;
a management information storage part (230) that stores management information indicating an output state for each set of the copy painting data; and
an image output part (270) that outputs the copy painting data, for which an output request is received, to an output apparatus (300), upon determining based on the management information that an output of the copy painting data is permitted in a case of receiving the output request of the copy painting data.

11. An information processing program that causes a computer to perform a process comprising:
storing, for each output condition in a copy painting information storage part (220), copy painting data representing a copy painting of an original painting generated based on imaging data, in which the original painting is imaged, and an output condition of the copy painting data;
storing, in a management information storage part (230), management information indicating an output state for each set of the copy painting data; and
outputting the copy painting data, for which an output request is received, to an output apparatus (300), upon determining based on the management information that an output of the copy painting data is permitted in a case of receiving the output request of the copy painting data.
